# EUROPÄISCHE PATENTSCHRIFT

(11) **EP 3 666 988 B1**
(45) Veröffentlichungstag und Bekanntmachung des Hinweises auf die Patenterteilung: **03.11.2021**
(21) Anmeldenummer: 19210144.2
(22) Anmeldetag: 19.11.2019
(51) Int. Cl.: E04B 9/30, E04B 9/12, E04B 9/16

(54) **PROFIL**
PROFILE
PROFILÉ

(30) Priorität: 13.12.2018 DE 102018132181
(43) Veröffentlichungstag der Anmeldung: 17.06.2020
(60) Teilanmeldung: 21197690.7
(73) Patentinhaber: Protektorwerk Florenz Maisch GmbH & Co. KG, 76571 Gaggenau (DE)
(72) Erfinder: WILLERSCHEID, Heiner, 77886 Lauf (DE)
(74) Vertreter: Manitz Finsterwald Patent- und Rechtsanwaltspartnerschaft mbB

(56) Entgegenhaltungen:
- WO-A1-2011/094831
- CA-C- 1 310 803
- FR-A1- 2 683 566
- US-A- 2 822 584
- US-A- 3 925 948

## Beschreibung

Die vorliegende Erfindung betrifft ein Profil für den Innenausbau, das sich entlang einer Längsrichtung erstreckt und zumindest einen zu der Längsrichtung parallelen Flächenabschnitt umfasst. Bei dem Profil kann es sich insbesondere um ein Deckenprofil handeln. Das Profil kann insbesondere dazu ausgebildet sein, quer zwischen Trägerprofilen, insbesondere Stahlträgern oder sonstigen tragenden Profilen, angeordnet zu werden. Dabei kann das Profil einen Flächenabschnitt aufweisen, der in montiertem Zustand eine Unterseite des Profils bildet und als Befestigungsfläche zur Befestigung von Beplankung, Deckenelementen oder ähnlichem, beispielsweise für eine abgehängte Decke, genutzt werden kann. Grundsätzlich kann das Profil aber auch andersartig oder zu anderen Zwecken ausgebildet sein.

Insbesondere um das Profil auf einfache Weise an einem Trägerprofil befestigen zu können, kann zumindest ein Flächenabschnitt des Profils einen Aufnahmeeinschnitt aufweisen, der sich ausgehend von einer Stirnseite des Profils in Längsrichtung in den Flächenabschnitt erstreckt und dazu ausgebildet ist, einen Flansch eines quer zur Längsrichtung verlaufenden Trägerprofils aufzunehmen. Auf diese Weise kann das Profil mit dem Aufnahmeeinschnitt auf den Flansch des Trägerprofils aufgesteckt werden. Bei dem zumindest einen Flächenabschnitt, der den Aufnahmeeinschnitt aufweist, handelt es sich vorzugsweise nicht um den vorstehend beschriebenen, die Unterseite des Profils bildenden Flächenabschnitt - sofern ein solcher überhaupt vorgesehen ist -, sondern insbesondere um einen in montiertem Zustand senkrecht ausgerichteten Flächenabschnitt.

Das Aufstecken des Profils an dem Flansch eines Trägerprofils kann dabei die einzige Art der Befestigung des Profils bei dessen Montage sein oder zumindest einen wesentlichen Beitrag zu dessen stabiler Anordnung leisten. Es ist daher wichtig, einen zuverlässigen Sitz des Profils an dem Flansch zu erreichen.

Ein Profil nach dem Oberbegriff des Anspruchs 1 wird in FR 2 683 566 A1 beschrieben. Weitere ähnliche Profile sind aus US 3,925,948 A, WO 2011/094831 A1, CA 1 310 803 C und US 2,822,584 A bekannt.

Es ist eine Aufgabe der Erfindung, ein Profil der beschriebenen Art bereitzustellen, das eine besonders zuverlässige Befestigung des Profils, insbesondere an einem oder mehreren Trägerprofilen, ermöglicht.

Die Aufgabe wird gelöst durch ein Profil mit den Merkmalen des Anspruchs 1. Vorteilhafte Ausführungsformen ergeben sich aus den Unteransprüchen, der vorliegenden Beschreibung sowie den Figuren.

Das erfindungsgemäße Profil erstreckt sich entlang einer Längsrichtung und umfasst zumindest einen, vorzugsweise mehrere zu der Längsrichtung parallele Flächenabschnitte. Das Profil ist für den Innenausbau geeignet. Insbesondere kann es sich bei dem Profil um ein Deckenprofil, beispielsweise ein C-Deckenprofil, handeln. Das Profil weist vorzugsweise einen zumindest im Wesentlichen konstanten Querschnitt auf. Dabei kommen neben der genannten C-Form grundsätzlich auch andere Profilformen, wie etwa eine Z-, eine Ω-, eine H- oder eine U-Form in Betracht. Die Querschnitte sind dabei in der Regel an die jeweilige Buchstabenform durch gerade Linien angenähert, welche die Schenkel des jeweiligen Querschnitts bilden und jeweils einem Flächenabschnitt des Profils entsprechen. Ein solcher Flächenabschnitt ist daher typischerweise eine längliche, zumindest im Wesentlichen flache Struktur. Dabei kann ein Flächenabschnitt aber auch, zumindest geringfügig, zueinander parallelversetzte Abschnitte umfassen, die durch Stufen verbunden sein können. Vorzugsweise sind die Stufen dabei schmaler als ein jeweils angrenzender Abschnitt des Flächenabschnitts. Außerdem kann ein Flächenabschnitt des Profils auch Sicken, Löcher und/oder Oberflächenstrukturen aufweisen.

Der genannte zumindest eine Flächenabschnitt weist erfindungsgemäß einen Aufnahmeeinschnitt auf, der sich ausgehend von der Stirnseite des Profils in Längsrichtung in den Flächenabschnitt erstreckt und dazu ausgebildet ist, einen Flansch eines quer zur Längsrichtung verlaufenden Trägerprofils aufzunehmen. Dabei ist der Aufnahmeeinschnitt nicht zwangsläufig darauf festgelegt, durch Schneiden erzeugt worden zu sein. Vielmehr kommen grundsätzlich auch andere Bearbeitungsarten, wie etwa Stanzen, zur Ausbildung des Aufnahmeeinschnitts in Betracht. Der Aufnahmeeinschnitt kann daher auch ganz allgemein durch eine zur Aufnahme eines Flansches geeignete Aussparung gebildet sein. Bevorzugt jedoch ist der Aufnahmeeinschnitt des erfindungsgemäßen Profils tatsächlich durch Einschneiden sowie vorzugsweise Umbiegen eines durch das Einschneiden definierten Abschnitts ausgebildet, wie nachstehend noch erläutert wird. Dadurch kann vorteilhafterweise Stanzabfall vermieden werden.

Das Aufnehmen eines Profilflansches in den Aufnahmeeinschnitt kann insbesondere einem Aufstecken des Profils mit seiner Stirnseite auf den Flansch entsprechen, so dass das Profil, insbesondere senkrecht, mit seiner Stirnseite auf das Trägerprofil trifft. Der Flansch wird dabei nicht vollständig in dem Aufnahmeeinschnitt aufgenommen. Vielmehr wird lediglich ein schmaler Bereich des Flansches vom Aufnahmeeinschnitt umgriffen. Das Eingreifen des Flansches in den Aufnahmeeinschnitt kann dabei insbesondere derart sein, dass der Flansch und der Flächenabschnitt des Profils, an dem der Aufnahmeeinschnitt ausgebildet ist, über Kreuz zueinander ausgerichtet sind.

Erfindungsgemäß ist an einer Seitenkante des Aufnahmeeinschnitts, die den Aufnahmeeinschnitt quer zur Längsrichtung begrenzt, eine Stützlasche vorgesehen, die von dem Flächenabschnitt vorsteht. Wie weiter unten noch ausführlicher erläutert wird, schließt die Stützlasche dabei mit dem angrenzenden Teil des Flächenabschnitts zumindest bereichsweise entlang der Seitenkante einen Winkel von über 90° ein, wobei der Winkel höchstens 135° beträgt. Die Stützlasche muss nicht unbedingt über ihre gesamte Länge in demselben Winkel zum Flächenabschnitt ausgerichtet sein. Wesentlich ist jedoch, dass sich die Stützlasche aus der Ebene heraus erstreckt, die durch den Flächenabschnitt oder zumindest durch einen an den Aufnahmeeinschnitt angrenzenden Teil des Flächenabschnitts, insbesondere durch den Rand des Aufnahmeeinschnitts, definiert wird. Die Stützlasche ist dabei vorzugsweise über ihre gesamte Länge, d.h. ihre gesamte Ausdehnung in Längsrichtung, mit der genannten Seitenkante des Aufnahmeeinschnitts verbunden.

Dadurch, dass von der Seitenkante des Aufnahmeeinschnitts aus die Stützlasche von dem genannten Flächenabschnitt vorsteht, wird die Biege- und Verwindungssteifigkeit des Profils insgesamt, vor allem aber im Bereich der Stirnseite des Profils, verbessert. Das trägt zu einer stabileren Anordnung des Profils an dem Flansch des Trägerprofils bei. Darüber hinaus kann die erfindungsgemäße Ausbildung des Profils die Befestigung des Profils an dem Trägerprofil noch zusätzlich dadurch verbessern, dass die Stützlasche an dem Flansch des Trägerprofils anliegt bzw. aufliegt. So kann sich das Profil, statt nur mit der Seitenkante des Aufnahmeeinschnitts Kontakt zum Flansch des Trägerprofils zu haben, zumindest mit einem Teil der Stützlasche, vorzugsweise mit der gesamten Stützlasche, an dem Flansch abstützen. Dabei kann sich eine Überlappung zwischen der Stützlasche und dem Flansch ergeben, so dass die Kontaktfläche vergrößert wird. Grundsätzlich besteht dadurch auch die Möglichkeit, diese Kontaktfläche für eine zusätzliche Verbindung der beiden Profile zu nutzen, z.B. für ein Verschweißen, Verschrauben oder Vernieten. So kann durch eine vergleichsweise geringfügige Modifikation des Profils eine wesentlich verbesserte Stabilität und Zuverlässigkeit der Befestigung des Profils erreicht werden.

Die Stützlasche kann flächig ausgebildet sein, etwa als flacher Streifen insbesondere mit konstanter Breite. Insbesondere kann die Stützlasche mit dem Flächenabschnitt einteilig ausgebildet sein und entlang zumindest eines Teils der genannten Seitenkante des Aufnahmeeinschnitts gegenüber dem an die Seitenkante angrenzenden Teil des Flächenabschnitts umgebogen sein. Die Stützlasche kann folglich ursprünglich ein Teil des Flächenabschnitts gewesen sein, der dann bei der Fertigstellung des Profils entlang der genannten Seitenkante aus der Ebene des Flächenabschnitts heraus in die von dem Flächenabschnitt vorstehende Ausrichtung umgebogen wurde. Das Ausbilden der Stützlasche kann dann umfassen, dass sie durch Einschneiden in den Flächenabschnitt zumindest an zwei ihrer Seiten aus dem Flächenabschnitt ausgeschnitten wurde. Eine dritte Seite der Stützlasche kann der ohnehin freien Stirnseite des Profils entsprechen. Die vierte Seite der Stützlasche kann der Seitenkante des Aufnahmeeinschnitts entsprechen kann, an der die Stützlasche relativ zu dem Flächenabschnitt umgebogen wird.

Eine einteilige Ausbildung der Stützlasche mit dem Flächenabschnitt, an dessen Aufnahmeeinschnitt die Stützlasche vorgesehen ist, ermöglicht es auch, das Profil insgesamt einteilig auszubilden. Dadurch braucht die Fertigung des erfindungsgemäßen Profils vorteilhafterweise keine Fügeschritte zum Verbinden separater Teile des Profils zu umfassen.

Erfindungsgemäß ist vorgesehen, dass die Stützlasche mit dem angrenzenden Teil des Flächenabschnitts zumindest bereichsweise entlang der Seitenkante, vorzugsweise über die gesamte Länge der Seitenkante, einen Winkel von über 90°, insbesondere von zumindest 95°, vorzugsweise von zumindest 100° einschließt, so dass sie über den Aufnahmeeinschnitt übersteht. Sofern die Stützlasche durch Herausbiegen aus dem Flächenabschnitt gebildet ist, entspricht dabei ein von der Stützlasche und dem an die Seitenkante angrenzenden Teil des Flächenabschnitts eingeschlossener Winkel von mehr 90° einem Umbiegen um weniger als 90°. Insofern ist die Stützlasche um weniger als 90°, insbesondere weniger als 85°, vorzugsweise weniger als 80°, aus dem Flächenabschnitt heraus umgebogen.

Wenn die Stützlasche zu dem Flächenabschnitt senkrecht ausgerichtet wäre, würde sie den Aufnahmeeinschnitt wie eine Wand flankieren, die bei senkrecht zum Flächenabschnitt in den Aufnahmeeinschnitt eingestecktem Flansch eines Trägerprofils bündig an diesem Flansch anliegen kann. Da der zwischen der Stützlasche und dem an die Seitenkante angrenzenden Teil des Flächenabschnitts eingeschlossene Winkel mehr als 90° beträgt, steht die Stützlasche über den Aufnahmeeinschnitt über, so dass der Aufnahmeeinschnitt bei senkrechtem Blick auf den Flächenabschnitt durch die Stützlasche verengt erscheint. Das Aufstecken des Profils mit dem Aufnahmeeinschnitt auf einen Flansch eines Trägerprofils derart, dass der Flansch senkrecht zu dem Flächenabschnitt ausgerichtet ist, hat somit zur Folge, dass die Stützlasche durch den Flansch weiter in Richtung einer 90°-Stellung aufgebogen wird. Diese Verformung erfolgt vorzugsweise zumindest teilweise elastisch, so dass die Stützlasche den Flansch dann mit einer Rückstellkraft beaufschlagt. Infolge dieser Rückstellkraft krallt sich die freie Kante der Stützlasche an deren von dem Flächenabschnitt wegweisendem Rand dadurch in den Flansch des Trägerprofils sozusagen ein. Auf diese Weise kann die Stabilität der Befestigung des Profils an dem Trägerprofil weiter verbessert werden.

Dabei beträgt der Winkel, den die Stützlasche mit dem an die Seitenkante, an der die Stützlasche vorgesehen ist, angrenzenden Teil des Flächenabschnitts einschließt, erfindungsgemäß höchstens 135°, insbesondere höchstens 120°. Das entspricht bei einer durch Herausbiegen aus dem Flächenabschnitt ausgebildeten Stützlasche einem Umbiegen um mindestens 45°, insbesondere mindestens 60°.

Dabei muss der genannte, zwischen der Stützlasche und dem Flächenabschnitt eingeschlossene Winkel aber nicht über die gesamte Länge der Stützlasche hinweg konstant sein. Insbesondere kann sich der Winkel gemäß einer vorteilhaften Ausführungsform mit zunehmendem Abstand von der Stirnseite vergrößern, so dass er an einer Position mit größerem Abstand von der Stirnseite größer ist als an einer Position mit geringerem Abstand von der Stirnseite. Die vorstehend genannten Winkel bzw. Winkelbereiche können sich dann insbesondere auf den Punkt der Stützlasche beziehen, an dem sie mit dem Flächenabschnitt den größten Winkel einschließt.

Dadurch, dass bei dieser Ausführungsform der Winkel mit größerem Abstand von der Stirnseite zunimmt, können die vorstehend beschriebene Beaufschlagung des Flansches und das vorstehend beschriebene Einkrallen in den Flansch umso stärker wirken, je weiter der Flansch von der Stirnseite des Profils aus in den Aufnahmeeinschnitt eindringt. Dadurch wird eine besonders zuverlässige Befestigung des Profils an dem Trägerprofil gewährleistet.

Ein entsprechender Vorteil kann noch zusätzlich oder auch unabhängig von den vorstehenden Ausführungsformen dadurch erreicht werden, dass der Aufnahmeeinschnitt derart ausgebildet wird, dass sich seine Breite, d.h. der Abstand zwischen der genannten Seitenkante und einer quer zur Längsrichtung gegenüberliegenden weiteren Seitenkante des Aufnahmeeinschnitts, mit zunehmendem Abstand von der Stirnseite verringert. Der Aufnahmeeinschnitt wird also enger, je weiter der Flansch in den Aufnahmeeinschnitt eindringt, so dass der Flansch durch die entgegengesetzten Seitenkanten des Aufnahmeeinschnitts zunehmend eingeklemmt wird. Auch auf diese Weise kann die Zuverlässigkeit der Befestigung des Profils an dem Trägerprofils verbessert werden. Die Breite des Aufnahmeeinschnitts kann sich beispielsweise dadurch verringern, dass eine der beiden Seitenkanten parallel zur Längsrichtung und die andere geringfügig schräg, beispielsweise in einem Winkel von höchstens 30°, insbesondere von höchstens 20°, vorzugsweise von 5° bis 10°, zur Längsrichtung ausgerichtet ist. Es können aber auch beide Seitenkanten, insbesondere in symmetrischer Weise, schräg zur Längsrichtung ausgebildet sein.

Ferner ist es bevorzugt, dass die Stützlasche eine Fläche aufweist, die der Fläche des Aufnahmeeinschnitts oder zumindest eines Teils des Aufnahmeeinschnitts entspricht. Die Flächen können einander insbesondere nicht nur hinsichtlich des jeweiligen Flächenbetrags, sondern auch hinsichtlich ihrer jeweiligen Form entsprechen. Da bei einer solchen Ausführungsform die Stützlasche hinsichtlich ihrer Maße flächig in den Aufnahmeeinschnitt aufgenommen werden könnte, stellt eine solche Ausbildung eine Voraussetzung dafür dar, dass die Stützlasche durch Herausbiegen aus dem Flächenabschnitt gebildet sein kann. Wenn die Fläche der Stützlasche der Fläche des Aufnahmeeinschnitts vollständig oder zumindest weitgehend entspricht, kann die Stützlasche vorteilhafterweise ohne jeglichen Stanzausschuss aus dem Flächenabschnitt durch Einschneiden und Herausbiegen ausgebildet werden.

Beispielsweise kann zur Ausbildung der Stützlasche der Flächenabschnitt stirnseitig in Längsrichtung bis zu der gewünschten Länge des Aufnahmeeinschnitts eingeschnitten werden, wobei am Ende dieses Längsschnitts quer dazu, insbesondere senkrecht zur Längsrichtung, ein kürzerer Seitwärtsschnitt vorgenommen wird. Ein durch diese zwei Schnitte begrenzter zumindest im Wesentlichen rechteckiger Abschnitt kann dann aus dem Flächenabschnitt herausgebogen werden und bildet die Stützlasche, während der dadurch erzeugte Freiraum im Flächenabschnitt den Aufnahmeeinschnitt bildet. Die Kante, an der das Umbiegen erfolgt, entspricht der genannten Seitenkante des Aufnahmeeinschnitts. Diese Kante muss nicht zwingend exakt parallel zum Längsschnitt verlaufen, sondern kann sich beispielsweise mit zunehmendem Abstand von der Stirnseite des Profils dem Längsschnitt annähern. An ihrem von der Stirnseite weg weisenden Ende trifft die Kante auf den Seitwärtsschnitt, wobei die Kante nicht unbedingt das Ende des Seitwärtsschnitts treffen muss, sondern auch näher am Längsschnitt auf den Seitwärtsschnitt treffen kann. Das ist insbesondere bei einem sich verengenden Aufnahmeeinschnitt zweckmäßig, da der somit über die Kante hinausragende Seitwärtsschnitt ein vorzugsweise zumindest teilweise elastisches Aufweiten des Aufnahmeeinschnitts ermöglicht, durch den der in den Aufnahmeeinschnitt eingeschobene Flansch eines Trägerprofils noch zuverlässiger eingeklemmt wird.

Gemäß einer vorteilhaften Ausführungsform ist an einer weiteren Seitenkante des Aufnahmeeinschnitts, die der genannten Seitenkante quer zur Längsrichtung entgegengesetzt ist, eine weitere Stützlasche vorgesehen, die von dem Flächenabschnitt vorsteht. Bei der weiteren Seitenkante kann es sich insbesondere um die vorstehend genannte weitere Seitenkante handeln. Die weitere Stützlasche kann entsprechend der genannten Stützlasche auf eine der vorstehend beschriebenen Weisen ausgebildet sein. Insbesondere können die Stützlasche und die weitere Stützlasche zumindest im Wesentlichen gleichartig, z.B. symmetrisch zueinander, ausgebildet und/oder angeordnet sein. Vorzugsweise stehen die Stützlasche und die weitere Stützlasche in dieselbe Richtung von dem Flächenabschnitt vor.

Bei einer Ausführungsform, bei der eine weitere Stützlasche vorgesehen ist, ist es ferner vorteilhaft, wenn die Fläche der Stützlasche sowie die Fläche der weiteren Stützlasche zusammen der Fläche des Aufnahmeeinschnitts entsprechen. Insbesondere ist es vorteilhaft, wenn die Fläche, die sich aus einem gedachten flächigen und bündigen Aneinanderfügen der Stützlasche und der weiteren Stützlasche ergibt, hinsichtlich ihrer Form der Fläche des Aufnahmeeinschnitts vollständig oder zumindest weitgehend entspricht. Auf diese Weise können die beiden Stützlaschen sowie der Aufnahmeeinschnitt gleichzeitig dadurch gebildet werden, dass der Flächenabschnitt stirnseitig in Längsrichtung eingeschnitten wird und am Ende dieses Längsschnitts in beide Richtungen quer dazu jeweils ein kürzerer Seitwärtsschnitt vorgenommen wird. Die zu beiden Seiten des Längsschnitts jeweils durch die Schnitte definierten zumindest im Wesentlichen rechteckigen Abschnitte können dann aus dem Flächenabschnitt herausgebogen werden und die beiden Stützlaschen bilden, während der so entstandene Freiraum zwischen den Kanten, an denen die Stützlaschen umgebogen wurden, den Aufnahmeeinschnitt bildet. Zumindest eine der beiden Umbiegekanten, die dann die beiden Seitenkanten des Aufnahmeeinschnitts bilden, kann dabei, wie vorstehend für eine einzelne Stützlasche beschrieben, einen zur Längsrichtung schrägen Verlauf aufweisen und/oder an einer anderen Stelle auf den jeweiligen Seitwärtsschnitt treffen als an dessen Ende.

Gemäß einer weiteren vorteilhaften Ausführungsform umfasst das Profil einen zu der Längsrichtung parallelen weiteren Flächenabschnitt, der zu dem genannten Flächenabschnitt quer zu der Längsrichtung entgegengesetzt angeordnet ist und der einen Aufnahmeeinschnitt aufweist, der sich ausgehend von der Stirnseite des Profils in Längsrichtung in den weiteren Flächenabschnitt erstreckt. Hier und im Folgenden wird dieser weitere Flächenabschnitt zur Unterscheidung von dem zuvor beschriebenen Flächenabschnitt jeweils als der "weitere Flächenabschnitt" bezeichnet. Der weitere Flächenabschnitt kann auch als ein zweiter Flächenabschnitt des Profils angesehen werden. Der zuvor beschriebene Flächenabschnitt wird dagegen hier und im Folgenden einfach als "Flächenabschnitt" ohne den Zusatz "weiteren" oder als der "genannte Flächenabschnitt" bezeichnet. Dieser Flächenabschnitt kann auch als ein erster Flächenabschnitt des Profils angesehen werden.

Der Aufnahmeeinschnitt des weiteren Flächenabschnitts ist dazu ausgebildet, gemeinsam mit dem Aufnahmeeinschnitt des Flächenabschnitts einen Flansch eines quer zur Längsrichtung verlaufenden Trägerprofils aufzunehmen. Insbesondere können die beiden Aufnahmeeinschnitte zu diesem Zweck in hierfür geeigneter Weise relativ zueinander angeordnet sein. An einer Seitenkante des Aufnahmeeinschnitts des weiteren Flächenabschnitts, die diesen Aufnahmeeinschnitt quer zur Längsrichtung begrenzt, ist eine Stützlasche vorgesehen, die von dem weiteren Flächenabschnitt vorsteht. Der an dem weiteren Flächenabschnitt vorgesehene Aufnahmeeinschnitt kann insbesondere auf eine der vorstehend für den Aufnahmeeinschnitt des genannten Flächenabschnitts beschriebenen Weisen ausgebildet sein. Vorzugsweise sind der Aufnahmeeinschnitt des Flächenabschnitts und der Aufnahmeeinschnitt des weiteren Flächenabschnitts gleichartig ausgebildet.

Ferner sind der Flächenabschnitt und der weitere Flächenabschnitt vorzugsweise parallel zueinander. Der Flächenabschnitt und der weitere Flächenabschnitt können beispielsweise den einander gegenüberliegenden Schenkeln eines U-Profils oder den entsprechenden Schenkeln eines C-Profils entsprechen.

Ferner ist es bevorzugt, wenn die eine oder die mehreren am Aufnahmeeinschnitt des Flächenabschnitts vorgesehenen Stützlaschen und die eine oder die mehreren am Aufnahmeeinschnitt des weiteren Flächenabschnitts vorgesehenen Stützlaschen aufeinander zu vorstehen. Insbesondere stehen die Stützlaschen auf diese Weise nicht nach außen über das restliche Profil vor, was sich ansonsten störend, etwa bei der kompakten Lagerung mehrerer Profile, auswirken könnte oder wovon unter Umständen eine Verletzungsgefahr ausgehen könnte.

Der Flächenabschnitt und der weitere Flächenabschnitt sind vorzugsweise spiegelsymmetrisch zueinander ausgebildet und insbesondere auch angeordnet. Die entsprechende Spiegelebene ist dabei bevorzugt parallel zur Längsrichtung. Darüber hinaus kann es ferner vorteilhaft sein, das gesamte Profil spiegelsymmetrisch zu dieser Spiegelebene auszubilden.

Gemäß einer weiteren vorteilhaften Ausführungsform weisen der Flächenabschnitt und der weitere Flächenabschnitt jeweils an einer von dem jeweils anderen Flächenabschnitt weg weisenden Oberfläche eine geprägte Struktur auf. Bei dieser Struktur kann es sich insbesondere um eine Fischhautprofilierung oder um ein regelmäßiges Punktmuster, vorzugsweise gemäß einem hexagonalen, rechteckigen oder zentriert-rechteckigen Gitter, handeln. Eine derartige Struktur vereinfacht die Befestigung verschiedener Elemente an den jeweiligen auf diese Weise ausgebildeten Flächenabschnitten, insbesondere das Einschrauben einer Schraube an einem jeweiligen durch das Einprägen vertieften Punkt des jeweiligen Musters, da die Schraube durch die Vertiefung beim Einschrauben gegen ein Verrutschen gesichert wird. Wenn das Profil neben dem genannten Flächenabschnitt und dem weiteren Flächenabschnitt einen oder mehrere sonstige Flächenabschnitte umfasst, können auch einzelne oder alle diese sonstigen Flächenabschnitte in entsprechender Weise eine Oberfläche mit geprägter Struktur aufweisen. Dies gilt insbesondere für einen gegebenenfalls vorgesehenen Zwischenflächenabschnitt, der den Flächenabschnitt und den weiteren Flächenabschnitt miteinander verbindet und bei montiertem Profil eine Unterseite des Profils darstellt, so dass er speziell geeignet für eine Befestigung von Beplankung oder von sonstigen Elementen ist.

Des Weiteren kann es vorteilhaft sein, wenn der Flächenabschnitt und der weitere Flächenabschnitt jeweils eine oder mehrere parallel zur Längsrichtung verlaufende Sicken aufweisen. Dadurch kann das Profil auf konstruktiv vergleichsweise einfache Weise verstärkt und insgesamt stabiler ausgebildet werden. Wenn an einem jeweiligen Flächenabschnitt mehrere Sicken vorgesehen sind, kann es vorteilhaft sein, wenn die Sicken regelmäßig verteilt entlang derselben zu der Längsrichtung parallelen Geraden angeordnet sind, so dass sie auch als eine einzelne regelmäßig unterbrochene Sicke angesehen werden können, die sich zumindest im Wesentlichen über die gesamte Länge des Profils hinweg erstreckt.

Gemäß einer weiteren vorteilhaften Ausführungsform umfasst das Profil einen zu der Längsrichtung parallelen Zwischenflächenabschnitt, welcher den Flächenabschnitt und den weiteren Flächenabschnitt miteinander verbindet und eine parallel zur Längsrichtung verlaufende Sicke aufweist. Diese Sicke kann der weiteren Versteifung des Profils dienen und somit zusätzlich oder alternativ zu den vorstehend beschriebenen Sicken zur allgemeinen Stabilität des Profils beitragen.

Vorzugsweise ist diese Sicke dabei von entgegengesetzten Rändern des Zwischenflächenabschnitts, an denen der Zwischenflächenabschnitt mit dem Flächenabschnitt bzw. dem weiteren Flächenabschnitt verbunden ist, gleich weit beabstandet. Durch einen solchen mittigen Verlauf der Sicke kann die Sicke zusätzlich zu ihrer stabilisierenden Funktion zugleich als Referenz für das Positionieren von an dem Zwischenflächenabschnitt zu befestigender Beplankung oder von sonstigen Elementen dienen. Insbesondere kann der Stoß zweier Platten, die bündig zueinander angeordnet an dem Profil befestigt werden sollen, entlang der Sicke ausgerichtet werden. Auf diese Weise kann das Profil die korrekte Anordnung von Elementen an dem Profil erleichtern.

Das Profil kann zusätzlich zu der genannten Stirnseite eine dazu in Längsrichtung entgegengesetzte weitere Stirnseite aufweisen. Um das Profil zwischen zwei Trägerprofile einsetzen und dort auf einfache Weise befestigen zu können, ist eine weitere Ausführungsform zweckmäßig, bei welcher der Flächenabschnitt einen weiteren Aufnahmeeinschnitt aufweist, der sich, in entsprechender Weise wie der zuvor beschriebene Aufnahmeeinschnitt, ausgehend von der weiteren Stirnseite des Profils in Längsrichtung in den Flächenabschnitt erstreckt und dazu ausgebildet ist, einen Flansch eines quer zur Längsrichtung verlaufenden weiteren Trägerprofils aufzunehmen. Dabei ist an einer Seitenkante des weiteren Aufnahmeeinschnitts, die den weiteren Aufnahmeeinschnitt quer zur Längsrichtung begrenzt, wiederum eine Stützlasche vorgesehen, die von dem Flächenabschnitt vorsteht.

Sofern das Profil, den weiter oben beschriebenen weiteren Flächenabschnitt umfasst, kann auch der weitere Flächenabschnitt einen weiteren Aufnahmeeinschnitt aufweisen, der sich von der weiteren Stirnseite in Längsrichtung in den Flächenabschnitt erstreckt und dazu ausgebildet ist, gemeinsam mit dem weiteren Aufnahmeeinschnitt des Flächenabschnitts einen Flansch des weiteren Trägerprofils aufzunehmen, wobei an einer Seitenkante des an dem weiteren Flächenabschnitt vorgesehenen weiteren Aufnahmeeinschnitts, die den weiteren Aufnahmeeinschnitt quer zur Längsrichtung begrenzt, wiederum eine Stützlasche vorgesehen ist, die von dem weiteren Flächenabschnitt vorsteht.

Der weitere Aufnahmeeinschnitt kann (jeweils) insbesondere in einer der vorstehend für den an der entgegengesetzten Stirnseite vorgesehenen Aufnahmeeinschnitt beschriebenen Weisen ausgebildet sein. Vorzugsweise sind die an den entgegengesetzten Stirnseiten vorgesehenen Aufnahmeeinschnitte gleichartig ausgebildet, so dass das Profil mit einer beliebigen seiner beiden Stirnseiten an einem jeweiligen Trägerprofil befestigt werden kann und insbesondere in beliebiger Ausrichtung zwischen zwei Trägerprofilen befestigt werden kann. Dabei ist es bevorzugt, wenn das Profil insgesamt in Bezug auf eine zur Längsrichtung senkrechte Spiegelebene spiegelsymmetrisch ausgebildet ist.

Die Erfindung wird nachfolgend lediglich beispielhaft unter Bezugnahme auf die Figuren weiter erläutert.
- Fig. 1 bis 3: zeigen eine erste Ausführungsform eines erfindungsgemäßen Profils in einer perspektivischen Darstellung der Endabschnitte des Profils (Fig. 1), in einem Querschnitt (Fig. 2) bzw. in einer Seitenansicht der Endabschnitte (Fig. 3).
- Fig. 4 bis 6: zeigen eine zweite Ausführungsform eines erfindungsgemäßen Profils in einer perspektivischen Darstellung der Endabschnitte des Profils (Fig. 4), in einem Querschnitt (Fig. 5) bzw. in einer Seitenansicht der Endabschnitte (Fig. 6).
- Fig. 7 bis 9: zeigen eine alternative Ausbildung eines Profils in einer perspektivischen Darstellung des Profils (Fig. 7), in einem Querschnitt (Fig. 8) bzw. in einer Seitenansicht der Endabschnitte des Profils (Fig. 9).
- Fig. 10: zeigt ein Beispiel für eine geprägte Struktur der äußeren Oberfläche eines Profils.

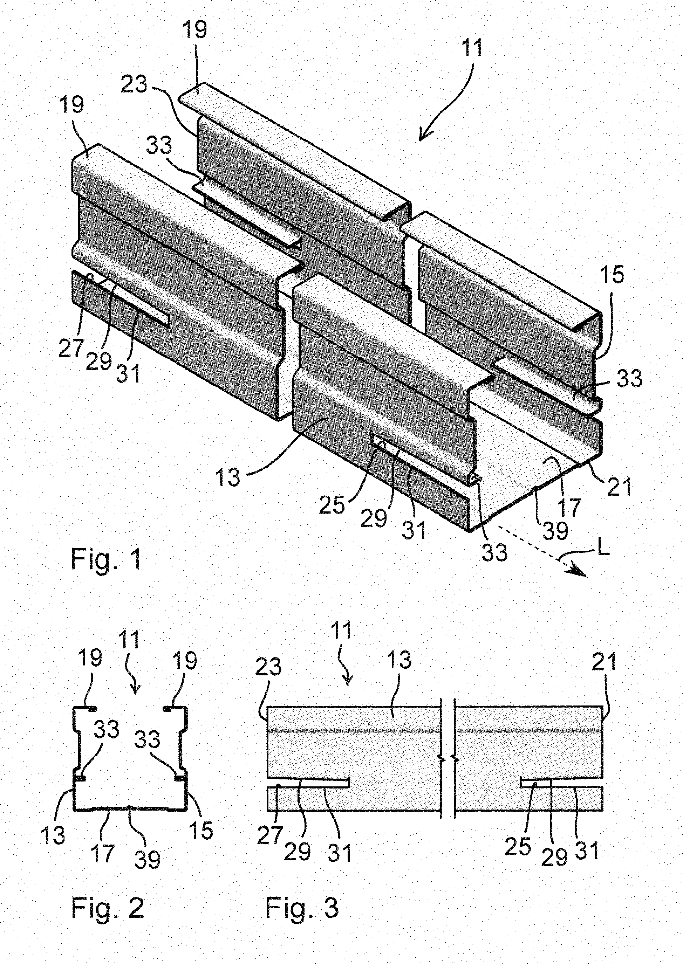

Bei den verschiedenen in den Figuren gezeigten Profilen 11 handelt es sich jeweils um ein Deckenprofil mit einem C-förmigen Querschnitt (vgl. Fig. 2, 5 und 8), das sich in eine Längsrichtung L erstreckt. Die zueinander quer zur Längsrichtung L entgegengesetzten Schenkel des Querschnitts entsprechen dabei einem Flächenabschnitt 13 bzw. einem weiteren Flächenabschnitt 15 des jeweiligen Profils 11. Zwei in dieselbe Richtung weisende Längskanten dieser beiden Flächenabschnitte 13, 15 werden durch einen Zwischenflächenabschnitt 17 verbunden, der senkrecht zu den beiden Flächenabschnitten 13, 15 ausgerichtet ist und die Unterseite des jeweiligen Profils 11 darstellt. An den jeweils entgegengesetzten Längskanten der beiden Flächenabschnitte 13, 15 erstrecken sich parallel zu dem Zwischenflächenabschnitt 17 zwei Endflächenabschnitte 19 aufeinander zu.

Die Profile 11 sind jeweils einteilig ausgebildet. Die genannte Profilform wird dabei durch Umbiegen eines flachen, sich in Längsrichtung L erstreckenden Blechstreifens um jeweils etwa 90° an den genannten Längskanten zwischen den Flächenabschnitten 13, 15, 17, 19 gebildet. Zudem sind weitere Umbiegungen vorgesehen, so dass der Flächenabschnitt 13, der weitere Flächenabschnitt 15 und der Zwischenflächenabschnitt 17 jeweils in mehrere zueinander geringfügig parallelversetzte Streifen mit unterteilt sind, zwischen denen Übergänge vorgesehen sind, die schmaler als die jeweils angrenzenden Streifen sind.

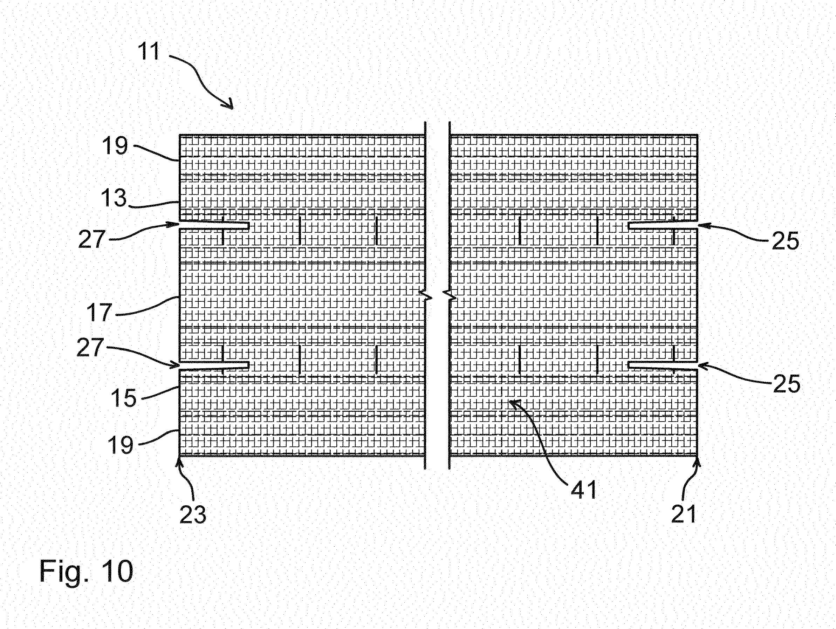

Die Endflächenabschnitte 19 sind zudem an ihren freien Enden um etwa 180° umgebogen, so dass eine verstärkte und abgerundete Abschlusskante gebildet wird. Ansonsten weisen die Flächenabschnitte 13, 15, 17, 19 des jeweiligen Profils 11 - von geprägten Strukturen in den Oberflächen, die weiter unten beschrieben werden, abgesehen (vgl. Fig. 10) - eine im Wesentlichen konstante Dicke auf.

Die Breite des Flächenabschnitts 13, die Breite des weiteren Flächenabschnitts 15 und die Breite des Zwischenflächenabschnitts 17 sind jeweils etwa gleich, so dass der Querschnitt im Wesentlichen quadratisch ist. Die Profile 11 sind jeweils bezogen auf eine Spiegelebene, die senkrecht zum Zwischenflächenabschnitt 17 und parallel zur Längsrichtung L in der Mitte zwischen dem Flächenabschnitt 13 und dem weiteren Flächenabschnitt 15 liegt, spiegelsymmetrisch.

Die Enden der Längserstreckung des jeweiligen Profils 11 bilden eine Stirnseite 21 bzw. eine weitere Stirnseite 23 des Profils 11. Ausgehend von der Stirnseite 21 erstreckt sich sowohl in den Flächenabschnitt 13 als auch in den weiteren Flächenabschnitt 15 jeweils ein Aufnahmeeinschnitt 25 in Längsrichtung L in den Flächenabschnitt 13 bzw. den weiteren Flächenabschnitt 15 hinein. Diese Aufnahmeeinschnitte 25 sind aufgrund der genannten Spiegelsymmetrie an einander entsprechenden Stellen in dem Flächenabschnitt 13 bzw. dem weiteren Flächenabschnitt 15 angeordnet. Dadurch kann ein Flansch eines nicht dargestellten Trägerprofils in beide Aufnahmeeinschnitte 25 eingesteckt werden bzw. kann das jeweilige Profil 11 mit seiner Stirnseite 21 auf einen Flansch eines Trägerprofils aufgesteckt werden, wobei der Flansch dann parallel zum Zwischenflächenabschnitt 17 angeordnet ist.

Die Profile 11 sind jeweils nicht nur zu der genannten Spiegelebene, sondern auch zu einer weiteren Spiegelebene, die senkrecht zur Längsrichtung L in der Mitte zwischen der Stirnseite 21 und der weiteren Stirnseite 23 liegt, spiegelsymmetrisch. Folglich erstreckt sich wie an der Stirnseite 21 auch an der weiteren Stirnseite 23 von dieser ausgehend sowohl in den Flächenabschnitt 13 als auch in den weiteren Flächenabschnitt 15 jeweils ein weiterer Aufnahmeeinschnitt 27 in Längsrichtung L in den Flächenabschnitt 13 bzw. den weiteren Flächenabschnitt 15 hinein. Die weiteren Aufnahmeeinschnitte 27 sind dabei jeweils entsprechend wie die genannten Aufnahmeeinschnitte 25 ausgebildet. Folglich kann das jeweilige Profil auch mit seiner weiteren Stirnseite 23 auf einen Flansch eines (weiteren) Trägerprofils aufgesteckt werden. Wenn im Folgenden die jeweilige Ausbildung der Aufnahmeeinschnitte 25 beschrieben wird, so gilt diese Beschreibung aufgrund der Spiegelsymmetrie jeweils in entsprechender Weise auch für die weiteren Aufnahmeeinschnitte 27.

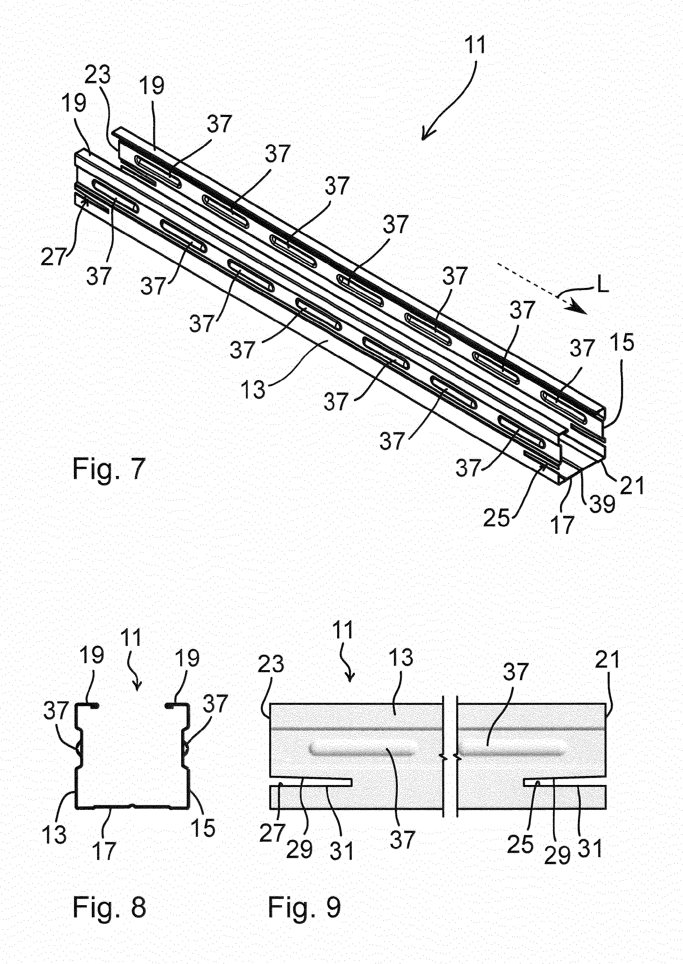

Die Aufnahmeeinschnitte 25 werden quer zur Längsrichtung L jeweils durch eine Seitenkante 29 sowie eine dazu entgegengesetzte weitere Seitenkante 31 begrenzt. Die beiden Seitenkanten 29, 31 weisen jeweils einen geraden Verlauf auf. Dabei ist aber jeweils die Seitenkante 29 geringfügig schräg zur Längsrichtung L ausgerichtet, während die weitere Seitenkante 31 parallel zur Längsrichtung L ist. Dadurch werden die Aufnahmeeinschnitte 25 mit zunehmendem Abstand von der Stirnseite 21 schmaler. An den Aufnahmeeinschnitten 25 ist jeweils zumindest eine Stützlasche 33 vorgesehen, die von der Seitenkante 29 bzw. der weiteren Seitenkante 31 aus von dem jeweiligen Flächenabschnitt 13 bzw. 15 nach innen vorsteht. In den Fig. 7 bis 9 sowie 10 sind die Stützlaschen 33 nicht gezeigt.

Die in den Figuren gezeigten verschiedenen Ausführungsformen erfindungsgemäßer Profile 11 unterscheiden sich insbesondere hinsichtlich der Anordnung der Stützlaschen 33. Bei der in den Fig. 1 bis 3 gezeigten ersten Ausführungsform ist lediglich an einer der beiden entgegengesetzten Seitenkanten 29, 31 eines jeweiligen Aufnahmeeinschnitts 25 eine Stützlasche 33 vorgesehen, nämlich an der Seitenkante 29, die von dem Zwischenflächenabschnitt 17 weiter entfernt ist als die weitere Seitenkante 31. Wenn der Zwischenflächenabschnitt 17 die Unterseite des jeweiligen Profils 11 darstellt, die nach der Montage des Profils 11 typischerweise nach unten weist, handelt es sich bei der Seitenkante 29 folglich um die obere der beiden entgegengesetzten Seitenkanten 29, 31. Auf diese Weise kann das Profil 11 mit der Stützlasche 33 auf dem Flansch des jeweiligen Trägerprofils aufliegen. Grundsätzlich könnte auch umgekehrt lediglich an der weiteren Seitenkante 31, die dem Zwischenflächenabschnitt 17 näher ist, eine Stützlasche 33 vorgesehen sein.

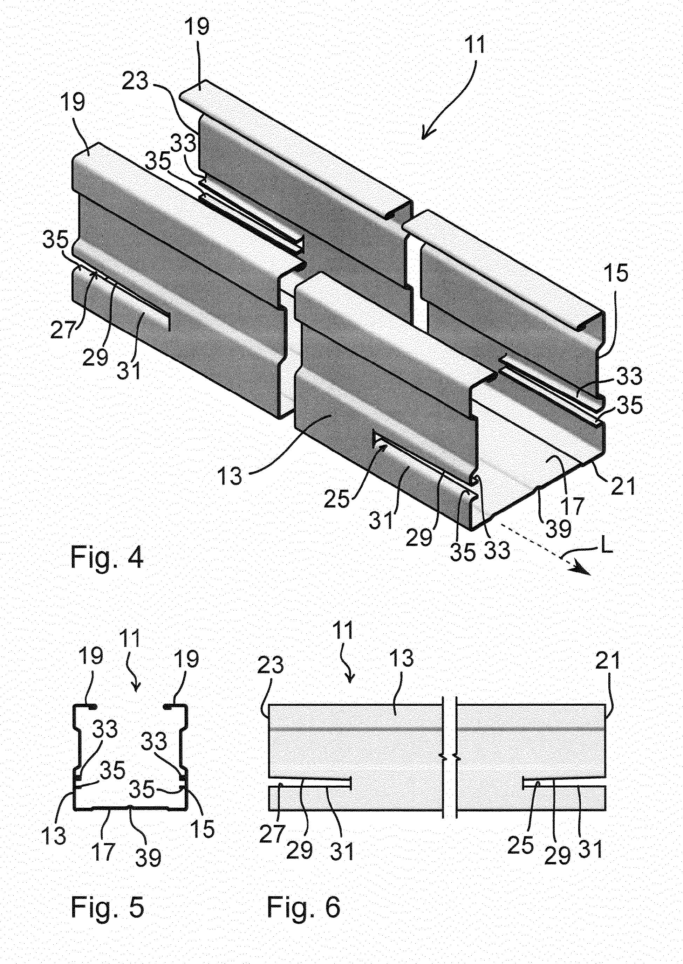

Der wesentliche Unterschied der in den Fig. 4 bis 6 gezeigten zweiten Ausführungsform zu der ersten Ausführungsform besteht darin, dass bei der zweiten Ausführungsform sowohl an der Seitenkante 29 des jeweiligen Aufnahmeeinschnitts 25 eine Stützlasche 33 vorgesehen ist als auch an der weiteren Seitenkante 31 des jeweiligen Aufnahmeeinschnitts 25 eine weitere Stützlasche 35 vorgesehen ist. Auf diese Weise kann beidseitig des in die Aufnahmeeinschnitte 25 eingesteckten Flansches jeweils eine Stützlasche 33 bzw. 35 anliegen, wodurch ein zuverlässiger Sitz des Profils 11 an dem Flansch erreicht wird. Zudem verstärken die von dem jeweiligen Flächenabschnitt 13 bzw. 15 vorstehenden Stützlaschen 33, 35 das Profil, so dass es speziell in seinen Endabschnitten, mit denen es an Trägerprofilen befestigt wird, besonders stabil ist.

Bei der ersten und bei der zweiten Ausführungsform sind die Stützlaschen 33, sowie bei der zweiten Ausführungsform auch die weiteren Stützlaschen 35, jeweils dadurch gebildet, dass der Flächenabschnitt 13 bzw. der weitere Flächenabschnitt 15 in Längsrichtung L on der Stirnseite 21 aus eingeschnitten wird. Dieser Längsschnitt verläuft bei der ersten Ausführungsform entlang der weiteren Seitenkante 31 und bei der zweiten Ausführungsform zwischen der Seitenkante 29 und der weiteren Seitenkante 31. Am von der Stirnseite 21 beabstandeten Ende des Längsschnitts wird anschließend senkrecht zur Längsrichtung L seitwärts eingeschnitten, wobei durch diesen Seitwärtsschnitt eine Endkante des jeweiligen Aufnahmeeinschnitts gebildet wird, welche die Seitenkante 29 und die weitere Seitenkante 31 miteinander verbindet. Dabei kann der Seitwärtsschnitt über die Seitenkante 29 und/oder die weitere Seitenkante 31 zumindest geringfügig hinausgehen (vgl. Fig. 3 und 6), um ein Aufweiten des Aufnahmeeinschnitts 25 an seinem verengten Ende zu ermöglichen.

Nach dem Einschneiden kann eine jeweilige Stützlasche 33 bzw. eine jeweilige weitere Stützlasche 35 durch Umbiegen an der Seitenkante 29 bzw. an der weiteren Seitenkante 31 aus dem jeweiligen Flächenabschnitt 13 bzw. 15 herausgebogen werden. Der zwischen den beiden Seitenkanten 33, 35 dadurch entstehende Freiraum bildet dann den Aufnahmeeinschnitt 25. Durch eine solche Ausbildung entspricht die Fläche des Aufnahmeabschnitts 25 der Fläche der Stützlasche 33 oder, sofern eine weitere Stützlasche 35 vorgesehen ist, der Fläche der beiden Stützlaschen 33, 35 zusammen.

Die in den Fig. 7 bis 9 gezeigte alternative Ausbildung eines Profils 11 dient insbesondere der Illustration von Sicken 37, die an dem Flächenabschnitt 13 sowie an dem weiteren Flächenabschnitt 15 des Profils 11 ausgebildet sind. Die Sicken 37 weisen dabei jeweils einen länglichen geraden Verlauf auf, der parallel zur Längsrichtung L ausgerichtet ist. Die an dem Flächenabschnitt 13 vorgesehenen Sicken 37 sind entlang einer gemeinsamen zur Längsrichtung L parallelen Geraden ausgerichtet. Dabei weisen sie jeweils dieselbe Länge auf und sind regelmäßig voneinander beabstandet. Entsprechendes gilt für die in dem weiteren Flächenabschnitt 15 ausgebildeten Sicken 37. Die Sicken 37 tragen zur Versteifung und somit zur Stabilität des Profils 11 bei. Daher ist es vorteilhaft, derartige Sicken 37 bei den erfindungsgemäßen Profilen 11 vorzusehen. Insbesondere können derartige Sicken 37 bei Profilen 11 gemäß der in den Fig. 1 bis 3 gezeigten ersten Ausführungsform oder bei Profilen 11 gemäß der in den Fig. 4 bis 6 gezeigten zweiten Ausführungsform vorgesehen werden.

Das in den Fig. 7 bis 9 gezeigte Profil 11 weist ebenso wie die beiden in den Fig. 1 bis 3 bzw. 4 bis 6 gezeigten Ausführungsformen zudem eine Mittelsicke 39 auf, die an dem Zwischenflächenabschnitt 17 vorgesehen ist, welcher den Flächenabschnitt 13 und den weiteren Flächenabschnitt 15 miteinander verbindet. Die Mittelsicke 39 verläuft durchgehend von der Stirnseite 21 bis zur entgegengesetzten weiteren Stirnseite 23 des Profils 11 und ist dabei parallel zur Längsrichtung L ausgerichtet. Grundsätzlich könnte die Mittelsicke 39 aber auch unterbrochen ausgebildet sein. Ähnlich wie die genannten Sicken 37 trägt auch die Mittelsicke 39 zur Stabilisierung des Profils 11 bei.

Die Mittelsicke 39 weist von den entgegengesetzten Rändern des Zwischenflächenabschnitts 17 und somit auch von den beiden Flächenabschnitten 13, 15 jeweils denselben Abstand auf. Dadurch eignet sie sich gut als Referenzlinie für die Positionierung des Stoßes zwischen zwei Platten, die bündig zueinander an dem Zwischenflächenabschnitt 17 befestigt werden können.

Die verschiedenen Flächenabschnitte 13, 15, 17, 19 können, insbesondere an ihren äußeren Oberflächen, jeweils eine Struktur 41 aufweisen, die vorzugsweise durch Prägen in die jeweilige Oberfläche eingebracht wird und der besseren Griffigkeit der jeweiligen Oberfläche sowohl hinsichtlich des Kontakts mit Beplankung oder sonstigen Elementen als auch hinsichtlich des Eingreifens von Schrauben oder ähnlichem dienen kann. Als eine solche Struktur 41 kommen verschiedene, insbesondere regelmäßige Muster in Betracht, von denen eines in Fig. 10 dargestellt ist. Von dem in Fig. 10 gezeigten Profil 11 sind lediglich die äußeren Oberflächen der Flächenabschnitte 13, 15, 17, 19 in einer gemeinsamen Ebene dargestellt. Ein solcher Zustand kann beispielsweise vorliegen, wenn das Profil 11 aus einem Blechstreifen gebildet wird, in den zunächst die gezeigte Struktur 41 geprägt wird und der erst danach in die dem gewünschten Querschnitt entsprechende Profilform gebogen wird. Die entsprechenden Längskanten, welche die verschiedenen Flächenabschnitte 13, 15, 17, 19 voneinander trennen, sind als von der regelmäßigen Struktur 41 abweichende, in Längsrichtung L verlaufende unterbrochene Linien dargestellt.

In dem in Fig. 10 gezeigten Beispiel weisen alle Oberflächen eine, und zwar jeweils dieselbe, in die jeweilige Oberfläche eingebrachte Struktur 41 auf, die durch eine Vielzahl kurzer, parallel oder senkrecht zur Längsrichtung L ausgerichteter Liniensegmente gebildet wird. Anstelle einer solchen Riffelung kann insbesondere auch ein Punktmuster, vorzugsweise mit regelmäßiger Gitterstruktur, vorgesehen sein. Die in Fig. 10 gezeigte Struktur 41 oder auch andere, insbesondere geprägte Strukturen können auch bei Profilen 11 gemäß der in den Fig. 1 bis 3 gezeigten ersten Ausführungsform oder gemäß der in den Fig. 4 bis 6 gezeigten zweiten Ausführungsform vorgesehen werden. Dabei können insbesondere der Zwischenflächenabschnitt 17 und/oder die beiden Flächenabschnitte 13, 15 derart strukturiert ausgebildet sein.

### Bezuqszeichen

- 11: Profil
- 13: Flächenabschnitt
- 15: weiterer Flächenabschnitt
- 17: Zwischenflächenabschnitt
- 19: Endflächenabschnitt
- 21: Stirnseite
- 23: weitere Stirnseite
- 25: Aufnahmeeinschnitt
- 27: weiterer Aufnahmeeinschnitt
- 29: Seitenkante
- 31: weitere Seitenkante
- 33: Stützlasche
- 35: weitere Stützlasche
- 37: Sicke
- 39: Mittelsicke
- 41: Struktur
- L: Längsrichtung

## Patentansprüche

1. Profil (11) für den Innenausbau, insbesondere Deckenprofil, das sich entlang einer Längsrichtung (L) erstreckt und zumindest einen zu der Längsrichtung (L) parallelen Flächenabschnitt (13) umfasst,
wobei der Flächenabschnitt (13) einen Aufnahmeeinschnitt (25) aufweist, der sich ausgehend von einer Stirnseite (21) des Profils (11) in Längsrichtung (L) in den Flächenabschnitt (13) erstreckt und dazu ausgebildet ist, einen Flansch eines quer zur Längsrichtung (L) verlaufenden Trägerprofils aufzunehmen,
wobei an einer Seitenkante (29) des Aufnahmeeinschnitts (25), die den Aufnahmeeinschnitt (25) quer zur Längsrichtung (L) begrenzt, eine Stützlasche (33) vorgesehen ist, die von dem Flächenabschnitt (13) vorsteht, **dadurch gekennzeichnet, dass** die Stützlasche (33) mit dem angrenzenden Teil des Flächenabschnitts (13) zumindest bereichsweise entlang der Seitenkante (29) einen Winkel von über 90° einschließt, so dass sie über den Aufnahmeeinschnitt (25) übersteht, wobei der Winkel höchstens 135° beträgt.

2. Profil nach Anspruch 1,
wobei die Stützlasche (33) mit dem Flächenabschnitt (13) einteilig ausgebildet ist und entlang der genannten Seitenkante (29) gegenüber dem angrenzenden Teil des Flächenabschnitts (13) umgebogen ist.

3. Profil nach Anspruch 1 oder 2,
wobei die Stützlasche (33) mit dem angrenzenden Teil des Flächenabschnitts (13) zumindest bereichsweise entlang der Seitenkante (29) einen Winkel von zumindest 95°, vorzugsweise von zumindest 100° einschließt.

4. Profil nach zumindest einem der vorstehenden Ansprüche,
wobei sich der Winkel mit zunehmendem Abstand von der Stirnseite (21) vergrößert.

5. Profil nach zumindest einem der vorstehenden Ansprüche,
wobei sich die Breite des Aufnahmeeinschnitts (25) mit zunehmendem Abstand von der Stirnseite (21) verringert.

6. Profil nach zumindest einem der vorstehenden Ansprüche,
wobei die Stützlasche (33) eine Fläche aufweist, die der Fläche des Aufnahmeeinschnitts (25) oder zumindest eines Teils des Aufnahmeeinschnitts (25) entspricht.

7. Profil nach zumindest einem der vorstehenden Ansprüche,
wobei an einer weiteren Seitenkante (31) des Aufnahmeeinschnitts (25), die der genannten Seitenkante (29) quer zur Längsrichtung (L) entgegengesetzt ist, eine weitere Stützlasche (35) vorgesehen ist, die von dem Flächenabschnitt (13) vorsteht.

8. Profil nach Anspruch 7,
wobei die Fläche der Stützlasche (33) sowie die Fläche der weiteren Stützlasche (35) zusammen der Fläche des Aufnahmeeinschnitts (25) entsprechen.

9. Profil nach zumindest einem der vorstehenden Ansprüche,
wobei das Profil (11) einen zu der Längsrichtung (L) parallelen weiteren Flächenabschnitt (15) umfasst, der zu dem genannten Flächenabschnitt (13) quer zu der Längsrichtung (L) entgegengesetzt angeordnet ist und der einen Aufnahmeeinschnitt (25) aufweist, der sich ausgehend von der Stirnseite (21) des Profils (11) in Längsrichtung (L) in den weiteren Flächenabschnitt (15) erstreckt und dazu ausgebildet ist, gemeinsam mit dem Aufnahmeeinschnitt (25) des Flächenabschnitts (13) einen Flansch eines quer zur Längsrichtung verlaufenden Trägerprofils aufzunehmen,
wobei an einer Seitenkante (29) des Aufnahmeeinschnitts (25) des weiteren Flächenabschnitts (15), die diesen Aufnahmeeinschnitt (25) quer zur Längsrichtung (L) begrenzt, eine Stützlasche (33) vorgesehen ist, die von dem weiteren Flächenabschnitt (15) vorsteht.

10. Profil nach Anspruch 9,
wobei die am Aufnahmeeinschnitt (25) des Flächenabschnitts (13) vorgesehene Stützlasche (33) und die am Aufnahmeeinschnitt (25) des weiteren Flächenabschnitts (15) vorgesehene Stützlasche (33) aufeinander zu vorstehen.

11. Profil nach Anspruch 9 oder 10,
wobei der Flächenabschnitt (13) und der weitere Flächenabschnitt (15) spiegelsymmetrisch zueinander sind.

12. Profil nach zumindest einem der Ansprüche 9 bis 11,
wobei der Flächenabschnitt (13) und der weitere Flächenabschnitt (15) jeweils an einer von dem jeweils anderen Flächenabschnitt (13, 15) weg weisenden Oberfläche eine geprägte Struktur (41), insbesondere eine Fischhautprofilierung oder ein regelmäßiges Punktmuster, vorzugsweise gemäß einem hexagonalen, rechteckigen oder zentriert-rechteckigen Gitter, aufweisen.

13. Profil nach zumindest einem der Ansprüche 9 bis 12,
wobei der Flächenabschnitt (13) und der weitere Flächenabschnitt (15) jeweils eine oder mehrere parallel zur Längsrichtung (L) verlaufende Sicken (37) aufweisen.

14. Profil nach zumindest einem der Ansprüche 9 bis 13,
wobei das Profil (11) einen zu der Längsrichtung (L) parallelen Zwischenflächenabschnitt (17) umfasst, welcher den Flächenabschnitt (13) und den weiteren Flächenabschnitt (15) miteinander verbindet und eine parallel zur Längsrichtung (L) verlaufende Sicke (39) aufweist,
wobei die Sicke (39) von entgegengesetzten Rändern des Zwischenflächenabschnitts (17) vorzugsweise gleich weit beabstandet ist.

15. Profil nach zumindest einem der vorstehenden Ansprüche,
wobei der Flächenabschnitt (13) einen weiteren Aufnahmeeinschnitt (27) aufweist, der sich ausgehend von einer in Längsrichtung (L) zu der genannten Stirnseite (21) entgegengesetzten weiteren Stirnseite (23) des Profils (11) in Längsrichtung (L) in den Flächenabschnitt (13) erstreckt und dazu ausgebildet ist, einen Flansch eines quer zur Längsrichtung (L) verlaufenden weiteren Trägerprofils aufzunehmen,
wobei an einer Seitenkante (29) des weiteren Aufnahmeeinschnitts (27), die den weiteren Aufnahmeeinschnitt (27) quer zur Längsrichtung (L) begrenzt, eine Stützlasche (33) vorgesehen ist, die von dem Flächenabschnitt (13) vorsteht.

## Claims

1. A profile (11) for interior construction, in particular a ceiling profile, which extends along a longitudinal direction (L) and which comprises at least one surface section (13) in parallel with the longitudinal direction (L), wherein the surface section (13) has a receiving cut (25) which extends, starting from an end face (21) of the profile (11), in the longitudinal direction (L) into the surface section (13) and which is configured to receive a flange of a support profile extending transversely to the longitudinal direction (L), wherein a support tab (33), which projects from the surface section (13), is provided at a side edge (29) of the receiving cut (25) which bounds the receiving cut (25) transversely to the longitudinal direction (L), **characterized in that** the support tab (33) encloses an angle of more than 90° at least regionally along the side edge (29) with the adjacent part of the surface section (13) such that said support tab (33) projects over the receiving cut (25), wherein the angle amounts to at most 135°.

2. A profile in accordance with claim 1,
wherein the support tab (33) is formed in one part with the surface section (13) and is bent over along said side edge (29) with respect to the adjacent part of the surface section (13).

3. A profile in accordance with claim 1 or claim 2,
wherein the support tab (33) encloses an angle of at least 95°, preferably of at least 100°, at least regionally along the side edge (29) with the adjacent part of the surface section (13).

4. A profile in accordance with at least one of the preceding claims,
wherein the angle increases as the spacing from the end face (21) increases.

5. A profile in accordance with at least one of the preceding claims,
wherein the width of the receiving cut (25) decreases as the spacing from the end face (21) increases.

6. A profile in accordance with at least one of the preceding claims,
wherein the support tab (33) has a surface which corresponds to the surface of the receiving cut (25) or of at least a part of the receiving cut (25).

7. A profile in accordance with at least one of the preceding claims,
wherein a further support tab (35), which projects from the surface section (13), is provided at a further side edge (31) of the receiving cut (25) which is opposite said side edge (29) transversely to the longitudinal direction (L).

8. A profile in accordance with claim 7,
wherein the surface of the support tab (33) and the surface of the further support tab (35) together correspond to the surface of the receiving cut (25).

9. A profile in accordance with at least one of the preceding claims,
wherein the profile (11) comprises a further surface section (15) which is in parallel with the longitudinal direction (L), which is arranged opposite said surface section (13) transversely to the longitudinal direction (L) and which has a receiving cut (25) which, starting from the end face (21) of the profile (11), extends in the longitudinal direction (L) into the further surface section (15) and which is configured to receive a flange of a support profile, which extends transversely to the longitudinal direction, together with the receiving cut (25) of the surface section (13),
wherein a support tab (33), which projects from the further surface section (13), is provided at a side edge (31) of the receiving cut (25) of the further surface section (15) which bounds this receiving cut (25) transversely to the longitudinal direction (L).

10. A profile in accordance with claim 9,
wherein the support tab (33) provided at the receiving cut (25) of the surface section (13) and the support tab (33) provided at the receiving cut (25) of the further surface section (15) project toward one another.

11. A profile in accordance with claim 9 or claim 10,
wherein the surface section (13) and the further surface section (15) are mirror symmetrical to one another.

12. A profile in accordance with at least one of the claims 9 to 11,
wherein the surface section (13) and the further surface section (15) each have, at a surface facing away from the respective other surface section (13, 15), a stamped structure (41), in particular a fish-skin profiling or a regular dot pattern, preferably in accordance with a hexagonal, rectangular or centered-rectangular grid.

13. A profile in accordance with at least one of the claims 9 to 12,
wherein the surface section (13) and the further surface section (15) each have one or more beads (37) extending in parallel with the longitudinal direction (L).

14. A profile in accordance with at least one of the claims 9 to 13,
wherein the profile (11) comprises an intermediate surface section (17) which is in parallel with the longitudinal direction (L), which connects the surface section (13) and the further surface section (15) to one another and which has a bead (39) extending in parallel with the longitudinal direction (L),
wherein the bead (39) is preferably spaced apart equally far from opposite margins of the intermediate surface section (17).

15. A profile in accordance with at least one of the preceding claims,
wherein the surface section (13) has a further receiving cut (27) which, starting from a further end face (23) of the profile (11) opposite said end face (21) in the longitudinal direction (L), extends in the longitudinal direction (L) into the surface section (13) and is configured to receive a flange of a further support profile extending transversely to the longitudinal direction (L),
wherein a support tab (33), which projects from the surface section (13), is provided at a side edge (31) of the further receiving cut (25) which bounds the further receiving cut (25) transversely to the longitudinal direction (L).

## Revendications

1. Profilé (11) pour l'aménagement intérieur, en particulier profilé de plafond, qui s'étend le long d'une direction longitudinale (L) et qui comprend au moins une portion de surface (13) parallèle à la direction longitudinale (L), dans lequel
la portion de surface (13) présente une entaille de réception (25) qui, partant d'une face frontale (21) du profilé (11), s'étend en direction longitudinale (L) jusque dans la portion de surface (13) et est ménagée pour recevoir une bride d'un profilé de support s'étendant transversalement à la direction longitudinale (L), et
sur un bord latéral (29) de l'entaille de réception (25), qui délimite l'entaille de réception (25) transversalement à la direction longitudinale (L), il est prévu une patte de soutien (33) qui fait saillie de la portion de surface (13), **caractérisé en ce que**
la patte de soutien (33) définit, avec la partie adjacente de la portion de surface (13), un angle de plus de 90° au moins localement le long du bord latéral (29) de manière à dépasser au-delà de l'entaille de réception (25), l'angle étant au maximum de 135°.

2. Profilé selon la revendication 1,
dans lequel la patte de soutien (33) est formée d'un seul tenant avec la portion de surface (13) et est repliée le long dudit bord latéral (29) par rapport à la partie adjacente de la portion de surface (13).

3. Profilé selon la revendication 1 ou 2,
dans lequel la patte de soutien (33) définit un angle d'au moins 95°, de préférence d'au moins 100°, avec la partie adjacente de la portion de surface (13) au moins localement le long du bord latéral (29).

4. Profilé selon l'une au moins des revendications précédentes,
dans lequel l'angle augmente au fur et à mesure de l'augmentation de la distance depuis la face frontale (21).

5. Profilé selon l'une au moins des revendications précédentes,
dans lequel la largeur de l'entaille de réception (25) diminue au fur et à mesure de l'augmentation de la distance depuis la face frontale (21).

6. Profilé selon l'une au moins des revendications précédentes,
dans lequel la patte de soutien (33) présente une surface correspondant à la surface de l'entaille de réception (25) ou à au moins une partie de l'entaille de réception (25).

7. Profilé selon l'une au moins des revendications précédentes,
dans lequel, sur un autre bord latéral (31) de l'entaille de réception (25), qui est opposé audit bord latéral (29) transversalement à la direction longitudinale (L), il est prévu une autre patte de soutien (35) qui fait saillie de la portion de surface (13).

8. Profilé selon la revendication 7,
dans lequel la surface de la patte de soutien (33) et la surface de l'autre patte de soutien (35) correspondent ensemble à la surface de l'entaille de réception (25).

9. Profilé selon l'une au moins des revendications précédentes,
dans lequel le profilé (11) comprend une autre portion de surface (15) parallèle à la direction longitudinale (L), qui est disposée à l'opposé de ladite portion de surface (13) transversalement à la direction longitudinale (L) et qui présente une entaille de réception (25) qui, en partant de la face frontale (21) du profilé (11), s'étend en direction longitudinale (L) jusque dans l'autre portion de surface (15) et est ménagée pour recevoir, conjointement avec l'entaille de réception (25) de la portion de surface (13), une bride d'un profilé de support s'étendant transversalement à la direction longitudinale, et sur un bord latéral (29) de l'entaille de réception (25) de l'autre portion de surface (15), qui délimite ladite entaille de réception (25) transversalement à la direction longitudinale (L), il est prévu une patte de soutien (33) qui fait saillie de l'autre portion de surface (15).

10. Profilé selon la revendication 9,
dans lequel la patte de soutien (33) prévue au niveau de l'entaille de réception (25) de la portion de surface (13) et la patte de soutien (33) prévue au niveau de l'entaille de réception (25) de l'autre portion de surface (15) font saillie l'une vers l'autre.

11. Profilé selon la revendication 9 ou 10,
dans lequel la portion de surface (13) et l'autre portion de surface (15) sont à symétrie axiale l'une par rapport à l'autre.

12. Profilé selon l'une au moins des revendications 9 à 11,
dans lequel la portion de surface (13) et l'autre portion de surface (15) présentent chacune, sur une surface respective dirigée en éloignement de l'autre portion de surface respective (13, 15), une structure estampée (41), en particulier un profilage en peau de poisson ou un motif de points réguliers, de préférence selon une grille hexagonale, rectangulaire ou rectangulaire centrée.

13. Profilé selon l'une au moins des revendications 9 à 12,
dans lequel la portion de surface (13) et l'autre portion de surface (15) comprennent chacune une ou plusieurs moulures (37) s'étendant parallèlement à la direction longitudinale (L).

14. Profilé selon l'une au moins des revendications 9 à 13,
dans lequel le profilé (11) comprend une portion de surface intermédiaire (17) parallèle à la direction longitudinale (L), qui relie entre elles la portion de surface (13) et l'autre portion de surface (15) et présente une moulure (39) s'étendant parallèlement à la direction longitudinale (L), et
la moulure (39) est de préférence équidistante des bords opposés de la portion de surface intermédiaire (17).

15. Profilé selon l'une au moins des revendications précédentes,
dans lequel la portion de surface (13) présente une autre entaille de réception (27) qui, partant d'une autre face frontale (23) du profilé (11) opposée à ladite face frontale (21) dans la direction longitudinale (L), s'étend en direction longitudinale (L) jusque dans la portion de surface (13) et est ménagée pour recevoir une bride d'un autre profilé de support s'étendant transversalement à la direction longitudinale (L), et
sur un bord latéral (29) de l'autre entaille de réception (27), qui délimite l'autre entaille de réception (27) transversalement à la direction longitudinale (L), il est prévu une patte de soutien (33) qui fait saillie de la portion de surface (13).
